# FASCICULE DE BREVET EUROPEEN

(11) **EP 4 556 325 B1**
(45) Date de publication et mention de la délivrance du brevet: **12.11.2025**
(21) Numéro de dépôt: 24183911.7
(22) Date de dépôt: 24.06.2024
(51) Int. Cl.: B60T 8/17, B60T 8/32, B64C 25/44, B60T 8/88, B60T 17/22

(54) **ACTIONNEUR MUNI DE DEUX CAPTEURS DE PRESSION ET D'UN SENSEUR DE PRESSION VIRTUEL ; UN SYSTEME DE FREINAGE ET UN AERONEF MUNIS D'UN TEL ACTIONNEUR, ET LE PROCEDE APPLIQUE**
AKTUATOR MIT ZWEI DRUCKSENSOREN UND EINEM VIRTUELLEN DRUCKSENSOR; BREMSSYSTEM UND LUFTFAHRZEUG MIT EINEM SOLCHEN AKTUATOR UND VERFAHREN ZUR ANWENDUNG DIESES STELLGLIEDS
ACTUATOR PROVIDED WITH TWO PRESSURE SENSORS AND A VIRTUAL PRESSURE SENSOR; A BRAKING SYSTEM AND AN AIRCRAFT PROVIDED WITH SUCH AN ACTUATOR, AND THE APPLIED METHOD

(30) Priorité: 16.11.2023 FR 2312560
(43) Date de publication de la demande: 21.05.2025
(73) Titulaire: Airbus Helicopters, 13725 Marignane Cedex (FR)
(72) Inventeur: BECQUET, Roland, 13590 MEYREUIL (FR); BASSET, Grégory, 13500 MARTIGUES (FR); GRONDIN, Thomas, 13430 EYGUIERES (FR); ROCHER, Antonin, 13820 ENSUES-LA-REDONNE (FR)
(74) Mandataire: GPI Brevets

(56) Documents cités:
- EP-A1- 4 086 169
- CN-A- 115 978 028
- CN-B- 103 786 704

## Description

La présente invention concerne un actionneur muni de deux capteurs de pression et d'un senseur de pression virtuel, un procédé de contrôle d'un tel actionneur, ainsi qu'un système de freinage et un aéronef munis d'un tel actionneur.

Un aéronef peut comporter une pluralité d'atterrisseurs comprenant chacun au moins une roue. L'expression « atterrisseurs à roue » est utilisée par la suite pour désigner un tel atterrisseur, quel que soit le nombre de roues.

Ainsi, un giravion peut comprendre deux atterrisseurs principaux et un atterrisseur auxiliaire comprenant chacun une ou plusieurs roues.

Un tel aéronef comporte de plus un système de freinage, notamment pour immobiliser l'aéronef sur une aire de stationnement.

Un système de freinage connu comporte un réservoir de liquide de frein. Le réservoir est relié hydrauliquement à une entrée hydraulique d'un relais de freinage par une pompe et un clapet anti-retour. Un accumulateur est en parallèle relié hydrauliquement à l'entrée hydraulique du relais de freinage. Enfin, le relais de freinage est relié hydrauliquement à deux freins respectivement de deux atterrisseurs principaux. Chaque frein peut comprendre au moins un vérin hydraulique apte à déplacer un stator de freinage contre un rotor de freinage solidaire d'une roue de l'atterrisseur concerné.

Le relais de freinage comporte alors un distributeur hydraulique par frein. Chaque distributeur hydraulique comprend un piston délimitant une chambre en communication hydraulique avec un dispositif de commande de freinage. La manœuvre du dispositif de commande de freinage induit le refoulement d'un liquide dans la chambre qui pousse le piston. Le déplacement du piston induit l'ouverture d'un clapet et la mise en pression du frein associé.

Par ailleurs, une poignée de commande de frein de parking est reliée à deux cames coopérant avec les deux pistons. Ainsi, une action sur la poignée de frein de parking fait tourner les deux cames ce qui provoque le déplacement des deux pistons et l'ouverture des deux clapets pour mettre en pression les deux freins.

Lorsque l'aéronef est en fonctionnement, l'énergie hydraulique nécessaire au freinage est fournie par la pompe. A l'arrêt, cette énergie hydraulique est fournie par l'accumulateur. Bien qu'efficace, ce système de freinage est basé sur l'utilisation d'une puissance hydraulique commune pour les deux freins. Une fuite hydraulique peut ainsi rendre inopérant simultanément les deux freins.

Le document EP3772442 B1 décrit un système de freinage comprenant une ligne d'alimentation hydraulique ou pneumatique alimentant une valve de contrôle en communication hydraulique ou pneumatique avec un frein. De plus, la valve de contrôle communique avec une valve de freinage de parking via un clapet anti-retour, la valve de freinage de parking étant reliée à une ligne de retour hydraulique ou pneumatique. Un contrôleur configuré pour piloter les valves est relié à une commande de frein de parking, à une commande de freinage et à un capteur de pression.

Lorsque la commande de frein est positionnée dans une position engagée, le contrôleur ferme la valve de freinage de parking et compare la pression mesurée à un seuil. Si la pression est inférieure au seuil, le contrôleur en déduit la présence d'un dysfonctionnement. Le contrôleur peut commander un déplacement de la commande de frein de parking dans une position non engagée afin d'informer un opérateur, et peut ouvrir la valve de freinage de parking.

Le document FR3076267 B1 décrit un procédé pour diagnostiquer un état d'usure d'un actionneur. Ce procédé comporte la mesure d'un signal provenant du moteur de l'actionneur, l'exécution d'un algorithme de fenêtrage pour obtenir à partir du signal un jeu de données comprenant un premier et un deuxième maximums, l'établissement d'un score attribué au jeu de données, et l'évaluation de l'usure en fonction du score.

Par ailleurs, un système connu comporte un actionneur électrohydraulique muni d'une pompe reliée hydrauliquement à un réservoir et à une liaison hydraulique. La pompe est commandée par un contrôleur en communication avec un capteur de pression mesurant une pression dans la liaison hydraulique. Ce système est intéressant, mais la panne du capteur de pression rend le système inopérant.

Pour y remédier, une architecture de surveillance connue comporte un contrôleur de commande relié à un capteur de commande et un contrôleur de surveillance relié à un capteur de surveillance mesurant sensiblement le même paramètre que le capteur de commande. Le contrôleur de surveillance vérifie qu'un ordre envoyé au contrôleur de commande est nominalement appliqué. La partie contrôle est ainsi indépendante de la partie commande. Une telle architecture est parfois dénommée COM/MON, le terme COM ayant trait au contrôleur de commande et le terme MON ayant trait au contrôleur de surveillance. Une telle architecture de surveillance est intéressante, mais nécessite la duplication de capteurs sujets à des pannes.

Le document EP 4 086 169 A1 décrit un système de freinage pour un avion comprenant un vérin de freinage; un circuit primaire d'alimentation en fluide hydraulique configuré pour fournir du fluide hydraulique sous pression au vérin de freinage; et un circuit secondaire d'alimentation en fluide hydraulique.

Le document CN 103 786 704 B décrit un système de freinage muni d'un système de freinage principal comprenant une source hydraulique reliée hydrauliquement à un actionneur de freinage. De plus, le système de freinage comprend un système de freinage de secours incluant une pompe mise en mouvement par une roue via un mécanisme de transmission.

Le document CN 115 978 028 A décrit un système de freinage pour un aéronef. Ce système comporte une pompe bidirectionnelle afin de commander un vérin.

La présente invention a alors pour objet de proposer un actionneur innovant visant à avoir une tolérance à la panne acceptable, en particulier pour une utilisation au sein d'un système de freinage d'un véhicule.

L'invention vise ainsi un actionneur muni d'une pompe reliée à une première liaison hydraulique et à une deuxième liaison hydraulique, la première liaison hydraulique étant connectée à un réservoir contenant un fluide, ledit actionneur ayant un contrôleur de commande communiquant avec un premier capteur de pression, le premier capteur de pression étant agencé sur la deuxième liaison hydraulique et mesurant une première pression d'alimentation, ledit actionneur comportant un contrôleur de surveillance communiquant avec le contrôleur de commande et un deuxième capteur de pression, le deuxième capteur de pression étant agencé sur la deuxième liaison hydraulique et mesurant une deuxième pression d'alimentation, dans un mode de fonctionnement nominal, le contrôleur de surveillance étant configuré pour surveiller l'actionneur en fonction de la deuxième pression d'alimentation et le contrôleur de commande étant configuré pour asservir une pression du fluide délivré par ladite pompe dans la deuxième liaison hydraulique à une consigne de pression en fonction de la première pression d'alimentation.

Cet actionneur comporte un senseur de pression virtuel muni d'un modèle de pression dépendant d'une valeur d'au moins un paramètre de fonctionnement de la pompe évaluée avec un instrument de vérification qui transmet au moins un signal de vérification porteur de ladite valeur au contrôleur de commande et au contrôleur de surveillance pour identifier une panne de l'actionneur et appliquer en conséquence un mode de fonctionnement dégradé.

L'expression « instrument de vérification » peut désigner un module capable de mesurer directement la valeur du paramètre de fonctionnement en question, voire un système pouvant comprendre un ou plusieurs capteur(s) et/ou des moyens de traitement du signal permettant de fournir une estimation de cette valeur du paramètre de fonctionnement.

L'actionneur est ainsi un actionneur électrohydraulique muni de multiples moyens de mesure de pression, et en particulier un actionneur acheminant un liquide hydraulique dans un frein si besoin. Cet actionneur peut notamment être un actionneur pour un système de freinage. Le système de freinage peut être utilisé au sein de divers systèmes mécaniques, et par exemple sur un véhicule, ce véhicule pouvant être un aéronef.

Le contrôleur de surveillance et le contrôleur de commande sont distincts et fonctionnellement ségrégés, tout en pouvant par exemple être des parties différentes d'une même unité, telle une carte électronique par exemple. De même, le premier capteur de pression et le deuxième capteur de pression sont distincts.

Le premier capteur de pression et le deuxième capteur de pression peuvent être positionnés pour mesurer une pression dans le même tronçon de la deuxième liaison hydraulique, à savoir sensiblement la même pression.

Le premier capteur de pression est utilisé dans le mode de fonctionnement nominal pour piloter la pompe, voire une vanne décrite par la suite. Le deuxième capteur de pression sert à surveiller le fonctionnement de l'actionneur.

Lorsque le frein n'est pas sollicité, le deuxième capteur de pression est par exemple utilisé par le contrôleur de surveillance qui vérifie que la pression régnant dans la deuxième liaison hydraulique est nulle. Dans la négative, le contrôleur de surveillance peut appliquer un mode de fonctionnement dégradé en signalant un défaut à un alerteur et/ou en inhibant la pompe en transmettant par exemple un signal à un relais électrique ou un équivalent pour ne plus alimenter électriquement la pompe et/ou le contrôleur de commande.

Lors d'un freinage de parking, le deuxième capteur de pression est par exemple utilisé par le contrôleur de surveillance pour vérifier que la pression régnant dans la deuxième liaison hydraulique est égale à une pression cible à l'issue d'une durée déterminée, par exemple une pression de l'ordre 70 bars plus ou moins 5 bars au bout de 2 secondes, et pour appliquer un mode de fonctionnement dégradé dans la négative.

De plus, l'actionneur comporte un senseur de pression virtuel dissimilaire des premier et deuxième capteurs de pression et indépendant, pour déterminer si un des premier et deuxième capteurs de pression ou la pompe dysfonctionne. Ce senseur de pression virtuel ne mesure pas une pression en tant que telle, mais émet au moins un signal de vérification variant en fonction d'un paramètre de fonctionnement de la pompe qui est l'image de la pression en aval de la pompe.

En effet, la pression régnant dans la deuxième liaison hydraulique dépend du volume de fluide refoulé par la pompe, et peut donc aussi être évaluée non pas avec un capteur de pression, mais à l'aide d'un paramètre de fonctionnement variant conjointement avec ce volume.

Le contrôleur de surveillance et le contrôleur de commande sont alors configurés pour déduire une valeur de pression à partir du ou des signaux de vérification émis, directement ou indirectement, par l'instrument de vérification afin de déterminer si le premier capteur de pression ou le deuxième capteur de pression ou la pompe dysfonctionne par comparaison avec la première pression d'alimentation et la deuxième pression d'alimentation. Si une panne est détectée, un mode de fonctionnement dégradé est appliqué.

Par suite, une panne d'un capteur de pression ne conduit pas nécessairement à la perte totale de l'actionneur grâce à la présence du senseur de pression virtuel. L'actionneur présente en particulier une tolérance accrue à la panne d'un capteur de pression.

L'actionneur peut de plus comporter une ou plusieurs des caractéristiques qui suivent, prises seules ou en combinaison.

Selon une possibilité, le senseur de pression virtuel peut mesurer un ou des paramètres de fonctionnement parmi la position d'un élément mobile de la pompe induisant la circulation de liquide au travers de la pompe, une caractéristique électrique d'un moteur électrique de la pompe.

Ainsi, la pompe peut comporter un moteur électrique ayant un composant mobile mettant en mouvement un organe de pompage par rapport à un carter, l'instrument de vérification mesurant au moins un des paramètres de fonctionnement suivants : le mouvement dudit organe de pompage ou dudit composant, une caractéristique électrique d'un courant électrique alimentant électriquement le moteur ou circulant dans ce moteur.

Par exemple, l'instrument de vérification comprend un capteur de position évaluant le nombre de tours effectués par un rotor du moteur électrique lors d'une phase de fonctionnement de la pompe, par exemple en détectant les passages successifs d'un repère du rotor devant un capteur à effet hall ou un équivalent, voire un senseur de température.

Le senseur de pression virtuel peut alors comprendre une loi de conversion du modèle de pression fournissant une pression en fonction du mouvement dudit organe de pompage, voire de la température. Le terme « loi » désigne par la suite par exemple un tableau de valeurs ou un équivalent, une ou plusieurs équations mathématiques, une intelligence artificielle et à titre illustratif un réseau de neurones, etc.

Alternativement, le paramètre de fonctionnement peut être une caractéristique électrique, telle qu'une puissance électrique consommée par le moteur durant une phase fonctionnement de la pompe par exemple. La puissance électrique consommée est l'image de la pression et du débit du fluide en sortie de pompe. La connaissance de cette puissance électrique, combinée éventuellement à une vitesse de rotation dudit composant du moteur de la pompe mesurée avec un senseur de vitesse ou connue, permet de créer un indicateur de pression intéressant.

Le senseur de pression virtuel peut alors comprendre une loi de conversion fournissant une pression en fonction de la caractéristique électrique, voire en supplément de ladite vitesse de rotation.

Alternativement, le senseur de pression virtuel peut comprendre une loi de conversion fournissant une pression en fonction du mouvement dudit organe de pompage, voire de la température, et de la caractéristique électrique, voire de la vitesse de rotation précédemment décrites pour avoir une précision optimale. Cette dernière variante peut permettre de s'assujettir, dans une certaine mesure, de l'usure du dispositif piloté par l'actionneur et/ou de frictions internes dans la pompe par exemple.

Selon une possibilité compatible avec les précédentes, le contrôleur de surveillance peut être configuré pour déterminer si la deuxième pression d'alimentation est identique à une marge prédéterminée près à une pression cible, le contrôleur de surveillance et le contrôleur de commande étant configurés pour appliquer un mode de fonctionnement dégradé quand la deuxième pression d'alimentation n'est pas identique à une marge prédéterminée près à la pression cible, voire pour appliquer le mode de fonctionnement nominal quand la deuxième pression d'alimentation est identique à une marge prédéterminée près à la pression cible.

Si la pression cible est sensiblement égale à la deuxième pression d'alimentation, alors le contrôleur de surveillance en déduit que l'actionneur fonctionne normalement. En effet, cela veut dire que le contrôleur de commande pilote normalement la pompe et donc que le premier capteur de pression fonctionne correctement, mais aussi que le deuxième capteur de pression fonctionne correctement. L'actionneur continue d'appliquer le mode de fonctionnement nominal.

Dans la négative, un élément de l'actionneur dysfonctionne et un mode fonctionnement dégradé doit être appliqué.

Selon un autre exemple, le contrôleur de surveillance peut être configuré pour déterminer la pression cible à partir de ladite consigne de pression.

Le contrôleur de surveillance peut appliquer une loi d'ajustement pour déterminer la pression cible. Par exemple, la pression cible est égale à zéro lorsqu'aucune consigne de pression n'est donnée.

Par contre, quand une consigne de pression est donnée, la pression cible peut être égale à la consigne de pression plus ou moins une marge. Dès lors, le mode de fonctionnement courant est par défaut le mode de fonctionnement nominal et le test peut alors être réalisé régulièrement à compter d'une durée prédéterminée suite à la réception de la consigne de pression.

Selon une autre possibilité, la pression cible peut être calculée par une équation mathématique en fonction du temps et de la consigne de pression.

Selon une possibilité compatible avec les précédentes, le contrôleur de commande peut être configuré pour déterminer une première pression de vérification à partir dudit au moins un signal de vérification et d'une loi de conversion, le contrôleur de surveillance étant configuré pour déterminer une deuxième pression de vérification à partir dudit au moins un signal de vérification et de la loi de conversion.

Le contrôleur de surveillance et le contrôleur de commande utilisent alors ces pressions de surveillance pour évaluer la présence d'une panne, et en déduire les actions à entreprendre en conséquence.

Eventuellement, l'actionneur peut comporter une mémoire permanente mémorisant des données d'actualisation comprenant une évolution de ladite valeur dudit au moins un paramètre de fonctionnement et d'au moins une des première et deuxième pressions de vérification lors d'un cycle de fonctionnement courant de la pompe durant une application du mode de fonctionnement nominal, au moins ledit contrôleur de surveillance ou ledit contrôleur de commande étant configuré pour mettre à jour ladite loi de conversion en fonction des données d'actualisation mémorisées.

La relation entre la valeur du ou des paramètres de fonctionnement et la pression régnant dans la deuxième liaison hydraulique peut évoluer, par exemple en fonction de l'usure du frein commandé le cas échéant. Dès lors, cette caractéristique permet de mettre à jour la loi de conversion par l'un et/ou l'autre des contrôleurs pour corriger la dispersion de l'évolution de la pression en fonction du ou des paramètres de fonctionnement. A titre d'exemple, les données d'actualisation sont injectées dans un modèle mathématique, tel qu'un réseau de neurones ou une formule mathématique par exemple, pour ajuster des coefficients variables de la loi de conversion.

Par ailleurs, le contrôleur de surveillance et le contrôleur de commande peuvent être configurés pour appliquer, lorsque l'actionneur ne fonctionne pas selon le mode de fonctionnement nominal, un mode de fonctionnement dégradé choisi parmi plusieurs modes de fonctionnement dégradé en fonction :
- d'une comparaison faite par le contrôleur de surveillance de la deuxième pression de vérification et de la deuxième pression d'alimentation et
- d'une comparaison faite par le contrôleur de commande de la première pression de vérification et de la première pression d'alimentation.

Si la deuxième pression de vérification et la deuxième pression d'alimentation sont identiques à une marge près et, en même temps, la première pression de vérification et la première pression d'alimentation sont différentes à une marge près, alors le premier capteur de pression d'alimentation est déficient.

A l'inverse, si la deuxième pression de vérification et la deuxième pression d'alimentation sont différentes à une marge près et, en même temps, la première pression de vérification et la première pression d'alimentation sont identiques à une marge près alors le deuxième capteur de pression d'alimentation est déficient.

Enfin, si la deuxième pression de vérification et la deuxième pression d'alimentation sont différentes à une marge près et, en même temps, la première pression de vérification et la première pression d'alimentation ne sont pas identiques à une marge près alors la pompe dysfonctionne.

Selon une possibilité compatible avec les précédentes, le contrôleur de commande peut transmettre au contrôleur de surveillance un signal de similitude indiquant si la première pression de vérification et la première pression d'alimentation sont identiques à une marge prédéterminée près.

Dès lors, le contrôleur de surveillance peut effectuer les comparaisons précédentes pour évaluer les actions correctives à apporter.

Selon une possibilité compatible avec les précédentes, tant que la deuxième pression de vérification et la deuxième pression d'alimentation sont identiques à une marge prédéterminée près et qu'en même temps la première pression de vérification et la première pression d'alimentation ne sont pas identiques à une marge prédéterminée près, ledit mode de fonctionnement dégradé peut être un mode de fonctionnement dégradé d'asservissement avec capteur virtuel durant lequel le contrôleur de commande est configuré pour émettre un signal de commande vers la pompe en fonction de la première pression de vérification et de ladite consigne de pression et le contrôleur de surveillance est configuré pour surveiller l'actionneur en utilisant la deuxième pression d'alimentation.

Dans ce cas, le premier capteur de pression d'alimentation est défectueux. Le contrôleur de surveillance transmet un signal au contrôleur de commande pour lui ordonner d'appliquer le mode de fonctionnement dégradé d'asservissement avec capteur virtuel. Le contrôleur de commande utilise la première pression de vérification à la place de la première pression d'alimentation pour piloter la pompe, voire une nouvelle loi d'asservissement.

Selon une possibilité compatible avec les précédentes tant que la deuxième pression de vérification et la deuxième pression d'alimentation ne sont pas identiques à une marge prédéterminée près et qu'en même temps la première pression de vérification et la première pression d'alimentation ne sont pas identiques à une marge prédéterminée près, ledit mode de fonctionnement dégradé peut être un mode inactif durant lequel le contrôleur de commande est inactif et le contrôleur de surveillance est configuré pour générer une alerte.

Dans ce cas, la pompe dysfonctionne. Le contrôleur de surveillance peut transmettre un signal à un alerteur, par exemple à un système avionique au sein d'un aéronef. En présence d'un autre actionneur dans l'aéronef, la consigne de pression envoyée à cet autre actionneur peut éventuellement être augmentée par le système avionique en présence de ladite alerte comme décrit par la suite.

Selon une possibilité compatible avec les précédentes, tant que la deuxième pression de vérification et la deuxième pression d'alimentation ne sont pas identiques à une marge prédéterminée près et qu'en même temps la première pression de vérification et la première pression d'alimentation mesurée sont identiques à une marge prédéterminée près, ledit mode de fonctionnement dégradé peut être un mode de fonctionnement dégradé de surveillance, le contrôleur de commande étant configuré pour émettre un signal de commande vers la pompe en fonction de la première pression d'alimentation et le contrôleur de surveillance est configuré pour surveiller l'actionneur en utilisant la deuxième pression de vérification.

Dans ce cas, le deuxième capteur de pression d'alimentation est défectueux. Le contrôleur de surveillance surveille le fonctionnement de l'actionneur à l'aide du senseur de pression virtuel, le contrôleur de commande fonctionnant normalement. Le contrôleur de surveillance utilise la deuxième pression de vérification à la place de la deuxième pression d'alimentation, voire une nouvelle loi de surveillance.

Selon une possibilité compatible avec les précédentes, la deuxième liaison hydraulique peut comporter une vanne pilotée par le contrôleur de commande.

Par exemple, lorsqu'une consigne de pression est atteinte, la vanne est fermée pour maintenir la pression en aval de la vanne égale à la consigne de pression.

L'invention vise aussi un procédé de contrôle d'un premier actionneur muni d'une pompe reliée à une première liaison hydraulique et à une deuxième liaison hydraulique, la première liaison hydraulique étant connectée à un réservoir contenant un fluide, caractérisé en ce que le procédé comporte les étapes suivantes :
- mesure d'une première pression d'alimentation dans ladite deuxième liaison hydraulique avec un premier capteur de pression,
- mesure d'une deuxième pression d'alimentation dans ladite deuxième liaison hydraulique avec un deuxième capteur de pression,
- dans un mode de fonctionnement nominal, asservissement d'une pression du fluide délivré par la pompe dans la deuxième liaison hydraulique, par exemple avec le contrôleur de commande, en fonction d'une consigne de pression et de la première pression d'alimentation, et surveillance de l'actionneur, par exemple avec le contrôleur de surveillance, en fonction de la deuxième pression d'alimentation,

- détermination d'au moins un paramètre de fonctionnement de la pompe, et
- détection d'une panne de l'actionneur et application en conséquence d'un mode de fonctionnement dégradé en fonction dudit au moins un paramètre de fonctionnement.

Ce procédé peut de plus comporter une ou plusieurs des étapes suivantes :
- détermination d'une première pression de vérification, avec le contrôleur de commande, à partir d'une valeur dudit au moins un paramètre de fonctionnement et d'une loi de conversion,
- détermination d'une deuxième pression de vérification, avec le contrôleur de surveillance, à partir d'une valeur dudit au moins un paramètre de fonctionnement et de la loi de conversion,
- comparaison avec le contrôleur de surveillance de la deuxième pression d'alimentation à une pression cible, et application du mode de fonctionnement nominal dans l'affirmative et d'un mode de fonctionnement dégradé dans la négative,
- tant que la deuxième pression de vérification et la deuxième pression d'alimentation sont identiques à une marge prédéterminée près et qu'en même temps la première pression de vérification et la première pression d'alimentation ne sont pas identiques à une marge prédéterminée près, ledit mode de fonctionnement dégradé est un mode de fonctionnement dégradé d'asservissement avec capteur virtuel,
- tant que la deuxième pression de vérification et la deuxième pression d'alimentation ne sont pas identiques à une marge prédéterminée près et qu'en même temps la première pression de vérification et la première pression d'alimentation ne sont pas identiques à une marge prédéterminée près, ledit mode de fonctionnement dégradé est un mode de fonctionnement dégradé d'asservissement sans capteur virtuel, et
- tant que la deuxième pression de vérification et la deuxième pression d'alimentation ne sont pas identiques à une marge prédéterminée près et qu'en même temps la première pression de vérification et la première pression d'alimentation mesurée sont identiques à une marge prédéterminée près, ledit mode de fonctionnement dégradé est un mode de fonctionnement dégradé de surveillance.

Eventuellement, le premier actionneur alimente en liquide hydraulique au moins un frein d'un premier atterrisseur principal d'un aéronef, ledit aéronef comportant un second actionneur alimentant en liquide hydraulique un frein d'un second atterrisseur principal, ladite consigne de pression est égale à une première pression de freinage durant un fonctionnement nominal et à une deuxième pression de freinage supérieure à la première pression de freinage en présence d'une alerte générée par le second actionneur.

Par ailleurs, l'invention est applicable à un système de freinage. Ainsi, un système de freinage peut être muni d'un frein hydraulique et d'une commande de freinage, le système de freinage comportant un actionneur selon l'invention, ladite commande de freinage émettant une consigne de pression pour piloter l'actionneur, ladite deuxième liaison hydraulique étant connectée hydrauliquement au frein hydraulique.

Par ailleurs, un aéronef peut être muni de deux atterrisseurs principaux à roue et d'un atterrisseur auxiliaire à roue, les deux atterrisseurs principaux à roue comportant chacun un tel système de freinage.

Eventuellement, l'aéronef comporte un système d'immobilisation pour immobiliser au sol l'atterrisseur auxiliaire à roue dans une position prédéterminée, et par exemple pour positionner la ou les roues de cet atterrisseur sensiblement parallèlement à la direction d'avancement de l'aéronef vers l'avant et/ou à l'axe de roulis de l'aéronef.

L'aéronef peut ainsi être immobilisé sur une pente, même en cas de dysfonctionnent d'un des deux systèmes de freinage. En freinant la ou les roues d'un seul atterrisseur principal et en bloquant l'atterrisseur auxiliaire par rapport à la cellule de cet aéronef pour maintenir sa ou ses roues sensiblement parallèles à l'axe de roulis de l'aéronef, le système permet ainsi d'immobiliser l'aéronef en cas de panne du système de freinage de l'autre atterrisseur principal. Eventuellement, la pression du liquide hydraulique alimentant le système de freinage en fonctionnement peut être augmentée dans cette configuration.

L'invention et ses avantages apparaîtront avec plus de détails dans le cadre de la description qui suit avec des exemples donnés à titre illustratif en référence aux figures annexées qui représentent :
la figure 1, un schéma d'un actionneur selon l'invention par exemple au sein d'un système de freinage,
la figure 2, un schéma d'un aéronef ayant des systèmes de freinage selon l'invention, et
la figure 3, un logigramme explicitant le procédé mis en œuvre par l'invention.

Les éléments présents dans plusieurs figures distinctes sont affectés d'une seule et même référence.

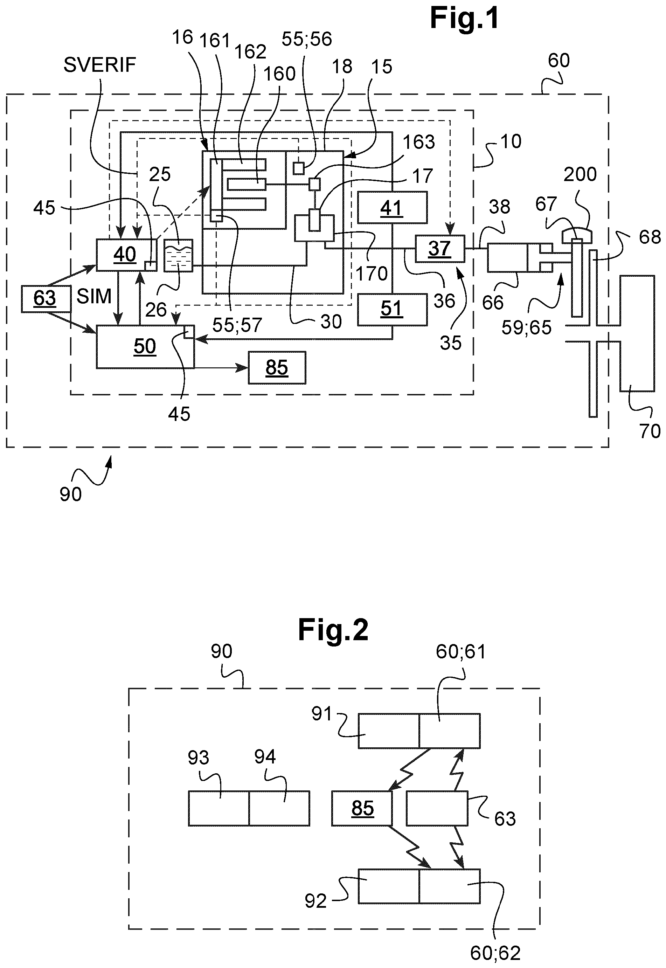

La figure 1 présente un actionneur 10, de type électrohydraulique. Cet actionneur 10 a pour fonction d'injecter si besoin un fluide 26 dans un dispositif piloté 59. Selon l'exemple donné, ce dispositif piloté 59 peut être un frein hydraulique 65, le fluide 26 étant un liquide de type liquide de frein usuel.

Cet actionneur 10 comprend une pompe 15 reliée à une première liaison hydraulique 30 et à une deuxième liaison hydraulique 35 pour faire circuler le fluide de la première liaison hydraulique 30 vers la deuxième liaison hydraulique 35, et inversement. Chaque liaison hydraulique 30,35 peut comprendre au moins un tuyau. La première liaison hydraulique 30 est connectée hydrauliquement à un réservoir 25 contenant le fluide 26. La deuxième liaison hydraulique 35 est connectée hydrauliquement au dispositif piloté 59. La deuxième liaison hydraulique 35 peut comprendre une vanne 37 reliée hydrauliquement à la pompe 15 par une première connexion hydraulique 36 et au dispositif piloté 59 par une deuxième connexion hydraulique 38.

La pompe 15 peut comprendre un moteur électrique 16 relié mécaniquement à au moins un organe de pompage 17, tel qu'un piston par exemple. Par exemple, le moteur électrique 16 peut être un moteur avec ou sans balais. Le moteur électrique 16 est alimenté électriquement par une liaison électrique usuelle non représentée, directement ou par un contrôleur de commande 40. Le moteur électrique 16 a pour fonction de mettre en mouvement cet organe de pompage 17 par rapport à un carter 18 de la pompe 15 pour provoquer la circulation du fluide 26.

La figure 1 illustre schématiquement un exemple de pompe 15. Par exemple, le moteur électrique 16 comporte un module de commande 161 pilotant un module moteur comprenant un composant 160 mobile, tel un rotor. Dès lors, le module de commande 161 peut délivrer un courant électrique à des bobines 162 pour générer la rotation du composant 160, ce composant 160 comprenant des aimants permanents. La rotation du composant 160 génère un déplacement en translation de l'organe de pompage 17 par rapport à un cylindre 170 de la pompe 15 via une came 163. La translation de l'organe de pompage 17 de la pompe 15 entraîne le déplacement de fluide 26 au travers de la pompe 15.

La pompe 15 peut être réversible pour faire circuler le fluide 26 du réservoir 25 vers le dispositif piloté 59, et du dispositif piloté 59 vers le réservoir 25 en fonction du besoin. Des clapets non représentés usuels peuvent être présents.

La pompe 15, et le cas échéant la vanne 37, sont commandées par un contrôleur de commande 40.

Le terme « contrôleur » désigne une unité de traitement pouvant appliquer des instructions pour mettre en œuvre les étapes du procédé décrit par la suite, ces instructions pouvant par exemple prendre la forme d'un segment de code. Une unité de traitement peut comprendre par exemple au moins un processeur et au moins une mémoire, au moins un circuit intégré, au moins un système programmable, au moins un circuit logique, ces exemples ne limitant pas la portée donnée à l'expression « unité de traitement ». Le terme processeur peut désigner aussi bien une unité centrale de traitement connue sous l'acronyme CPU, une unité graphique de traitement GPU, une unité digitale connue sous l'acronyme DSP, un microcontrôleur, etc.

Le contrôleur de commande 40 est ainsi relié à la pompe 15, et en particulier au moteur électrique 16 via une liaison filaire ou non filaire afin de lui transmettre un signal de commande requérant le fonctionnement ou l'arrêt du moteur électrique 16. Le terme « signal » désigne par la suite un signal analogique ou numérique, optique, électrique ou radio. Par exemple, le contrôleur de commande 40 peut transmettre un signal de puissance qui actionne la pompe.

De même, le contrôleur de commande 40 est relié le cas échéant à la vanne 37, via une liaison filaire ou non filaire, afin de lui transmettre un signal d'ouverture/fermeture pour requérir l'ouverture ou la fermeture de cette vanne 37.

De plus, le contrôleur de commande 40 est relié, via une liaison filaire ou non filaire, à un premier capteur de pression 41. Le premier capteur de pression 41 est agencé sur la deuxième liaison hydraulique 35. Le premier capteur de pression 41 transmet au contrôleur de commande 40 un signal porteur d'une première pression d'alimentation PCOM régnant dans la deuxième liaison hydraulique 35.

Par ailleurs, l'actionneur 10 comporte un contrôleur de surveillance 50. Le contrôleur de surveillance 50 est relié par une liaison filaire ou non filaire au contrôleur de commande 40 et a pour fonction de surveiller le fonctionnement de l'actionneur 10.

A cet effet, le contrôleur de surveillance 50 est relié par une liaison filaire ou non filaire à un deuxième capteur de pression 51, le deuxième capteur de pression 51 étant agencé sur la deuxième liaison hydraulique 35. Le deuxième capteur de pression 51 transmet au contrôleur de surveillance 50 un signal porteur d'une deuxième pression d'alimentation PMON régnant dans la deuxième liaison hydraulique 35.

Dans ces conditions, durant un mode de fonctionnement nominal MODNOM, le contrôleur de commande 40 pilote la pompe 15 en fonction d'une consigne de pression PCONS et de la première pression d'alimentation PCOM. Le contrôleur de commande 40 détermine si le fluide 26 doit circuler entre le réservoir 25 et le dispositif piloté 59. Dans l'affirmative, le contrôleur de commande 40 transmet un signal pour ouvrir la vanne 37. De plus, le contrôleur de commande 40 détermine le signal de commande à envoyer à la pompe 15 en fonction d'une loi d'asservissement visant à faire tendre la première pression d'alimentation PCOM vers la consigne de pression PCONS. La consigne de pression PCONS peut être mémorisée, calculée ou transmise par une commande manœuvrée par un opérateur.

De son côté, le contrôleur de surveillance 50 surveille l'actionneur 10 en fonction de la deuxième pression d'alimentation PMON, par exemple en comparant la deuxième pression d'alimentation PMON à une pression cible fonction de la consigne de pression PCONS tel que décrit par la suite. Le contrôleur de surveillance 50 peut en outre émettre un signal d'alerte notamment vers un alerteur 85, par exemple d'un système avionique au sein d'un aéronef. Un tel alerteur 85 peut générer une alerte visuelle, par exemple par le biais de l'émission d'une lumière avec une diode électroluminescente ou un équivalent ou de l'affichage sur un écran d'un ou plusieurs caractères, d'une alarme sonore, par le biais d'un haut-parleur, et/ou d'une alarme haptique, par exemple à l'aide d'une unité vibrante faisant vibrer un organe tenu ou porté par un individu.

Pour détecter une possible panne, l'actionneur 10 comporte de plus un senseur de pression virtuel. Ce senseur est qualifié de virtuel dans la mesure où il ne mesure pas directement une pression, mais au moins un autre paramètre variant conjointement avec cette pression.

Le senseur de pression virtuel est ainsi muni d'un modèle de pression, par exemple mémorisé dans le contrôleur de commande 40 et le contrôleur de surveillance 50. Le modèle de fonctionnement comporte une loi de conversion donnant une pression en fonction de la valeur d'un ou de plusieurs paramètres de fonctionnement de la pompe 15. Dès lors, le senseur de pression virtuel comprend un instrument de vérification 55 qui comporte au moins un organe qui transmet un signal de vérification SVERIF au contrôleur de commande 40 et au contrôleur de surveillance 50 pour leur permettre de détecter une panne éventuelle de l'actionneur 10 et appliquer dans ce cas le mode de fonctionnement dégradé MODDEG requis.

Le ou les signaux de vérification SVERIF sont porteurs de la valeur d'un paramètre de fonctionnement de la pompe 15.

Par exemple, l'instrument de vérification 55 comporte un capteur de mouvement 56 mesurant le mouvement de l'organe de pompage 17 ou d'un composant 160 de la pompe 15, voire un capteur de température mesurant une température dans ou en dehors de la pompe 15. Par exemple, le signal de vérification émis par le capteur de mouvement indique le nombre de tours effectués par le rotor depuis une activation de la pompe 15. En effet, cette information est l'image du volume de fluide 26 traversant la pompe 15, et dès lors de la pression régnant dans la deuxième liaison hydraulique 35. En outre, l'efficacité de la pompe 15 peut varier en fonction de la température ce qui peut être évaluée à l'aide du capteur de température.

Alternativement ou de manière complémentaire, l'instrument de vérification 55 comporte un senseur électrique 57 usuel mesurant une caractéristique électrique du courant électrique consommé par le moteur électrique 16 de la pompe 15, telle une puissance électrique par exemple, voire aussi un capteur de vitesse mesurant une vitesse de rotation du rotor.

Dès lors, le contrôleur de commande 40 est configuré pour déterminer une première pression de vérification PV1 à partir du ou des signaux de vérification SVERIF et d'une loi de conversion du modèle de pression. De même, le contrôleur de surveillance 50 est configuré pour déterminer une deuxième pression de vérification PV2 à partir du ou des signaux de vérification SVERIF et de la loi de conversion. Par exemple, la loi de conversion comporte soit une équation mathématique donnant une pression en fonction du ou des paramètres de fonctionnement, soit une première équation mathématique donnant un volume en fonction du ou des paramètres de fonctionnement et une deuxième équation mathématique donnant une pression en fonction de ce volume.

Eventuellement, lors d'un cycle de fonctionnement de la pompe 15 selon un mode de fonctionnement nominal, la valeur du ou des paramètres de fonctionnement et de la pression mesurée par un des capteurs de pression forment des données d'actualisation mémorisées dans une mémoire permanente 45 du contrôleur de commande 40 et/ou du contrôleur de surveillance 50 pour mise à jour de la loi de conversion. Le contrôleur concerné met automatiquement à jour la loi de conversion à partir des données d'actualisation et d'un modèle d'actualisation, par exemple à l'issue d'un cycle de fonctionnement, et peut transmettre la nouvelle loi de conversion à l'autre contrôleur.

A partir des pressions de vérification PV1, PV2 et des pressions d'alimentation PCOM, PMON, le contrôleur de surveillance 50 peut évaluer la présence d'une panne et les actions correctives à réaliser.

Un tel actionneur 10 peut faire partie d'un système de freinage 60. Ce système de freinage 60 peut comprendre une commande de freinage 63, par exemple pour requérir un freinage de parking. Cette commande de freinage 63 est manœuvrable par un opérateur et peut comprendre un bouton ou un levier par exemple. Cette commande de freinage 63 peut transmettre, par une liaison filaire ou non filaire, un signal de consigne au contrôleur de commande 40 et au contrôleur de surveillance 50. Le signal de consigne peut comprendre une consigne de pression, par exemple de 0 bar lorsque le freinage n'est pas requis et de 70 bars lorsqu'un freinage de parking est requis.

En outre, le système de freinage 60 comprend un frein hydraulique 65 usuel connecté hydrauliquement à la deuxième liaison hydraulique 35. A titre d'exemple, un tel frein hydraulique 65 comporte un ou plusieurs vérins hydrauliques 66 connectés hydrauliquement à la deuxième liaison hydraulique 35 et au moins un stator 67 mobile en translation par rapport à un support 200. Le ou les vérins hydrauliques 66 sont alors configurés pour pouvoir pousser le ou les stators 67 contre un ou des rotors 68 solidaires d'un système à freiner.

En particulier, le système de freinage 60 peut être agencé sur tout type de système mécanique nécessitant le freinage d'un organe. Par exemple, le système de freinage peut être agencé sur un véhicule pour freiner une roue 70.

Selon la figure 2, le véhicule peut être un aéronef 90. Cet aéronef 90 peut être muni de deux atterrisseurs principaux à roue 91, 92 et d'un atterrisseur auxiliaire à roue 93. Dès lors, chaque atterrisseur principal à roue 91, 92 peut comporter son propre système de freinage 60.

Eventuellement, l'atterrisseur auxiliaire à roue 93 peut être mobile en rotation autour d'un axe de pilotage pour faire tourner l'aéronef 90 au sol. L'aéronef 90 peut comporter un système d'immobilisation 94 pour interdire ladite rotation et immobiliser l'atterrisseur auxiliaire à roue 93 par rapport à un fuselage de l'aéronef 90 dans une position prédéterminée au sol. Dans cette position prédéterminée, la roue de l'atterrisseur auxiliaire à roue 93 peut s'étendre parallèlement à un sens de déplacement de l'aéronef 90 vers l'avant. Ainsi, même en cas de panne totale d'un système de freinage 60, l'aéronef 90 ne risque pas de tourner indûment. Un tel système d'immobilisation peut être d'un type usuel, et peut à titre d'exemple comprendre un doigt pénétrant dans un orifice ou une encoche ménagé dans une plaque solidaire en rotation de l'atterrisseur.

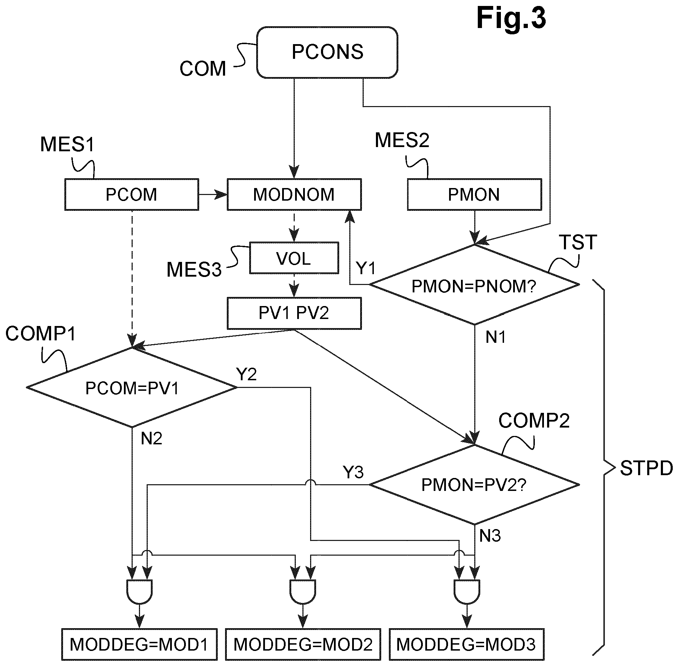

La figure 3 illustre le procédé mis en œuvre par l'invention.

Ce procédé comporte une commande COM de l'actionneur 10 avec la commande de freinage 63. La commande de freinage 63 émet un signal porteur d'une consigne de pression PCONS vers le contrôleur de commande 40 et le contrôleur de surveillance 50. Par exemple, la consigne de freinage PCONS est émise vers un système avionique, qui la transmet au contrôleur de commande 40 et le contrôleur de surveillance 50 sans modification ou après modification. Par exemple, si une panne est détectée sur le premier actionneur 61 de la figure 2, le système avionique peut comprendre un contrôleur avionique configuré pour majorer la consigne de pression transmise au second actionneur 62 afin de compenser le dysfonctionnement du premier actionneur 61.

Eventuellement, sans action sur la commande de freinage 63, l'actionneur peut considérer par défaut que la consigne de pression est égale à zéro.

De plus, le procédé comporte la mesure MES1 d'une première pression d'alimentation PCOM dans la deuxième liaison hydraulique 35 avec le premier capteur de pression 41, et la mesure MES2 d'une deuxième pression d'alimentation PMON dans la deuxième liaison hydraulique 35 avec le deuxième capteur de pression 51.

Le contrôleur de surveillance 50 détermine alors un état de fonctionnement de l'actionneur en fonction de la consigne de pression PCONS reçue et de la deuxième pression d'alimentation PMON.

Tant qu'aucun freinage n'est requis, le contrôleur de surveillance 50 peut vérifier que la deuxième pression d'alimentation PMON est inférieure à un seuil. Dans la négative, une alerte peut être générée et/ou le contrôleur de surveillance 50 peut déconnecter électriquement le contrôleur de commande 40 et/ou la pompe 15 d'une source d'alimentation électrique, par exemple en transmettant un signal à un relais électrique.

Si la consigne de freinage n'est pas nulle, le mode de fonctionnement peut être par défaut le mode de fonctionnement nominal. A réception de la consigne de pression, le contrôleur de commande 40 ouvre éventuellement la vanne 37 et asservit la pompe 15 en fonction d'une différence entre la consigne de pression PCONS et la première pression d'alimentation PCOM

Dès lors, durant une étape de test TST, le contrôleur de surveillance 50 détermine une pression cible PNOM, par exemple à partir de la consigne de pression PCONS. La pression cible PNOM peut être une plage de pression égale à la consigne de pression, plus ou moins une marge par exemple.

Durant cette étape de test TST, le contrôleur de surveillance 50 peut déterminer si la deuxième pression d'alimentation PMON est identique à une marge prédéterminée près à la pression cible PNOM à l'issue d'une durée prédéterminée. Cette durée peut être établie par essais et correspond au temps nécessaire pour que la pression atteigne la pression cible dans la deuxième liaison hydraulique 35.

Dans l'affirmative Y1, le contrôleur de surveillance 50 applique le mode de fonctionnement nominal MODNOM, et transmet éventuellement un signal au contrôleur de commande 40 porteur d'un ordre d'application du mode de fonctionnement nominal MODNOM. De plus, le contrôleur de surveillance 50 surveille le fonctionnement de l'actionneur 10 en continuant de suivre l'évolution de la deuxième pression d'alimentation PMON par rapport à la pression cible PNOM.

Dans la négative N1, le contrôleur de surveillance 50 détermine le mode de fonctionnement dégradé MODDEG à appliquer.

Dès lors, le procédé comporte la détermination MES3 de la valeur d'au moins un paramètre de fonctionnement VOL de la pompe 15 avec l'instrument de vérification 55.

Le procédé comporte alors la détection STPD d'une panne de l'actionneur 10 et l'application en conséquence d'un mode de fonctionnement dégradé MODDEG en fonction de la valeur courante du ou des paramètres de fonctionnement.

Le contrôleur de commande 40 détermine ainsi une première pression de vérification PV1 en fonction de la loi de conversion en vigueur et de la valeur courante du ou des paramètres de fonctionnement. De même, le contrôleur de surveillance 50 détermine ainsi une deuxième pression de vérification PV2 en fonction de la même loi de conversion et de la valeur courante du ou des paramètres de fonctionnement.

Le contrôleur de surveillance 50 compare lors d'une étape COMP1 la deuxième pression de vérification PV2 par rapport à la deuxième pression d'alimentation PMON.

De même, le contrôleur de commande 40 compare lors d'une étape COMP2 la première pression de vérification PV1 avec la première pression d'alimentation PCOM.

Le contrôleur de surveillance 50 et le contrôleur de commande 40 sont configurés pour appliquer un mode de fonctionnement dégradé MODDEG en fonction de ces deux comparaisons.

Pour que le contrôleur de surveillance 50 détermine le mode de fonctionnement dégradé, le contrôleur de commande 40 peut transmettre au contrôleur de surveillance 50 un signal de similitude SIM indiquant si la première pression de vérification PV1 et la première pression d'alimentation PCOM sont identiques à une marge prédéterminée près. Le contrôleur de surveillance 50 transmet alors un signal au contrôleur de commande 40 porteur du mode de fonctionnement dégradé à appliquer. L'inverse est aussi possible.

Tant que la deuxième pression de vérification PV2 et la deuxième pression d'alimentation PMON sont identiques à une marge prédéterminée près selon la flèche Y3 et qu'en même temps la première pression de vérification PV1 et la première pression d'alimentation PCOM ne sont pas identiques à une marge prédéterminée près selon la flèche N2, le mode de fonctionnement dégradé MODDEG est un mode de fonctionnement dégradé d'asservissement avec capteur virtuel MOD1 .

Durant ce mode de fonctionnement dégradé d'asservissement avec capteur virtuel MOD1, le contrôleur de commande 40 émet un signal de commande vers la pompe 15 en fonction de la première pression de vérification PV1, au lieu de la première pression d'alimentation PCOM dans le mode de fonctionnement nominal, et de la consigne de pression PCONS. Le contrôleur de surveillance 50 surveille l'actionneur 10 de la même manière que dans le mode de fonctionnement nominal, en utilisant la deuxième pression d'alimentation PMON.

Tant que la deuxième pression de vérification PV2 et la deuxième pression d'alimentation PMON ne sont pas identiques à une marge prédéterminée près selon la flèche N3 et qu'en même temps la première pression de vérification PV1 et la première pression d'alimentation PCOM ne sont pas identiques à une marge prédéterminée près selon la flèche N2, le mode de fonctionnement dégradé MODDEG est un mode inactif MOD2.

Durant le mode inactif MOD2, le contrôleur de commande 40 ne pilote plus la pompe 15, et le contrôleur de surveillance 50 transmet un signal à l'alerteur 85 pour signaler un dysfonctionnement de la pompe 15.

Tant que la deuxième pression de vérification PV2 et la deuxième pression d'alimentation PMON ne sont pas identiques à une marge prédéterminée près selon la flèche N3 et qu'en même temps la première pression de vérification PV1 et la première pression d'alimentation PCOM mesurée sont identiques à une marge prédéterminée près selon la flèche Y2, le mode de fonctionnement dégradé MODDEG est un mode de fonctionnement dégradé de surveillance MOD3.

Durant le mode de fonctionnement dégradé de surveillance MOD3, le contrôleur de commande 40 émet un signal de commande vers la pompe 15 en fonction de la première pression d'alimentation PCOM, comme dans le mode de fonctionnement nominal. Par contre, le contrôleur de surveillance 50 est configuré pour surveiller l'actionneur 10 en utilisant la deuxième pression de vérification PV2 au lieu de la deuxième pression d'alimentation PMON.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles. Il est bien sûr envisageable d'apporter des modifications sans sortir du cadre de la présente invention, tel que défini par les revendications suivantes.

## Revendications

1. Actionneur (10) pour un système de freinage, l'actionneur (10) étant muni d'une pompe (15) reliée à une première liaison hydraulique (30) et à une deuxième liaison hydraulique (35), la première liaison hydraulique (30) étant connectée à un réservoir (25) contenant un fluide (26), ledit actionneur (10) ayant un contrôleur de commande (40) communiquant avec un premier capteur de pression (41), le premier capteur de pression (41) étant agencé sur la deuxième liaison hydraulique (35) et mesurant une première pression d'alimentation (PCOM), ledit actionneur (10) comportant un contrôleur de surveillance (50) communiquant avec le contrôleur de commande (40) et un deuxième capteur de pression (51), le deuxième capteur de pression (51) étant agencé sur la deuxième liaison hydraulique (35) et mesurant une deuxième pression d'alimentation (PMON), dans un mode de fonctionnement nominal (MODNOM) le contrôleur de surveillance (50) étant configuré pour surveiller l'actionneur (10) en fonction de la deuxième pression d'alimentation (PMON) et le contrôleur de commande (40) étant configuré pour asservir une pression du fluide délivré par ladite pompe (15) dans la deuxième liaison hydraulique (35) à une consigne de pression (PCONS) en fonction de la première pression d'alimentation (PCOM),
caractérisé en ce ledit actionneur (10) comporte un senseur de pression virtuel muni d'un modèle de pression dépendant d'une valeur d'au moins un paramètre de fonctionnement de la pompe (15) évaluée avec un instrument de vérification (55) qui transmet au moins un signal de vérification (SVERIF) porteur de ladite valeur au contrôleur de commande (40) et au contrôleur de surveillance (50) pour identifier une panne de l'actionneur (10) et appliquer en conséquence un mode de fonctionnement dégradé (MODDEG), le contrôleur de commande (40) étant configuré pour déterminer une première pression de vérification (PV1) à partir dudit au moins un signal de vérification (SVERIF) et d'une loi de conversion du modèle de pression, le contrôleur de surveillance (50) étant configuré pour déterminer une deuxième pression de vérification (PV2) à partir dudit au moins un signal de vérification (SVERIF) et de la loi de conversion ; le contrôleur de surveillance (50) et le contrôleur de commande (40) étant configurés pour appliquer, lorsque l'actionneur (10) ne fonctionne pas selon le mode de fonctionnement nominal (MODNOM), un mode de fonctionnement dégradé (MODDEG) choisi parmi plusieurs modes de fonctionnement dégradé en fonction :
- d'une comparaison (COMP1) faite par le contrôleur de surveillance (50) de la deuxième pression de vérification (PV2) et de la deuxième pression d'alimentation (PMON) et
- d'une comparaison (COMP2) faite par le contrôleur de commande (40) de la première pression de vérification (PV1) et de la première pression d'alimentation (PCOM).

2. Actionneur selon la revendication 1,
**caractérisé en ce que** la pompe (15) comporte un moteur (16) électrique ayant un composant (160) mobile mettant en mouvement un organe de pompage (17) par rapport à un carter (18), l'instrument de vérification (55) mesurant au moins un des paramètres de fonctionnement suivants : le mouvement dudit organe de pompage (17) ou du composant (160) du moteur (16), une caractéristique électrique d'un courant électrique alimentant électriquement ou circulant dans le moteur (16).

3. Actionneur selon l'une quelconque des revendications 1 à 2,
**caractérisé en ce que** le contrôleur de surveillance (50) est configuré pour déterminer si la deuxième pression d'alimentation (PMON) est identique, à une marge prédéterminée près, à une pression cible (PNOM), le contrôleur de surveillance (50) et le contrôleur de commande (40) appliquant un mode de fonctionnement dégradé quand la deuxième pression d'alimentation (PMON) n'est pas identique, à une marge prédéterminée près, à la pression cible (PNOM).

4. Actionneur selon la revendication 3,
**caractérisé en ce que** le contrôleur de surveillance (50) est configuré pour déterminer la pression cible (PNOM) à partir de ladite consigne de pression (PCONS).

5. Actionneur selon l'une quelconque des revendications 1 à 4,
**caractérisé en ce que** ledit actionneur (10) comporte une mémoire (45) permanente mémorisant des données d'actualisation comprenant une évolution de ladite valeur dudit au moins un paramètre de fonctionnement et d'au moins une des première et deuxième pressions de vérification lors d'un cycle de fonctionnement courant de la pompe (15) durant une application du mode de fonctionnement nominal, au moins ledit contrôleur de surveillance (50) ou ledit contrôleur de commande (40) étant configuré pour mettre à jour ladite loi de conversion en fonction des données d'actualisation mémorisées.

6. Actionneur selon l'une quelconque des revendications 1 à 5,
**caractérisé en ce que**, tant que la deuxième pression de vérification (PV2) et la deuxième pression d'alimentation (PMON) sont identiques, à une marge prédéterminée près, et qu'en même temps la première pression de vérification (PV1) et la première pression d'alimentation (PCOM) ne sont pas identiques, à une marge prédéterminée près, ledit mode de fonctionnement dégradé (MODDEG) est un mode de fonctionnement dégradé d'asservissement avec capteur virtuel (MOD1) durant lequel le contrôleur de commande (40) est configuré pour émettre un signal de commande vers la pompe (15) en fonction de la première pression de vérification (PV1) et de ladite consigne de pression (PCONS) et le contrôleur de surveillance (50) est configuré pour surveiller l'actionneur (10) en utilisant la deuxième pression d'alimentation (PMON).

7. Actionneur selon l'une quelconque des revendications 1 à 6,
**caractérisé en ce que** tant que la deuxième pression de vérification (PV2) et la deuxième pression d'alimentation (PMON) ne sont pas identiques, à une marge prédéterminée près, et qu'en même temps la première pression de vérification (PV1) et la première pression d'alimentation (PCOM) ne sont pas identiques, à une marge prédéterminée près, ledit mode de fonctionnement dégradé (MODDEG) est un mode inactif (MOD2) durant lequel le contrôleur de commande (40) est inactif et le contrôleur de surveillance (50) est configuré pour générer une alerte.

8. Actionneur selon l'une quelconque des revendications 1 à 7,
**caractérisé en ce que** tant que la deuxième pression de vérification (PV2) et la deuxième pression d'alimentation (PMON) ne sont pas identiques, à une marge prédéterminée près, et qu'en même temps la première pression de vérification (PV1) et la première pression d'alimentation (PCOM) mesurée sont identiques, à une marge prédéterminée près, ledit mode de fonctionnement dégradé (MODDEG) est un mode de fonctionnement dégradé de surveillance (MOD3), le contrôleur de commande (40) étant configuré pour émettre un signal de commande vers la pompe (15) en fonction de la première pression d'alimentation (PCOM) et le contrôleur de surveillance (50) est configuré pour surveiller l'actionneur (10) en utilisant la deuxième pression de vérification (PV2).

9. Actionneur selon l'une quelconque des revendications 1 à 8,
**caractérisé en ce que** la deuxième liaison hydraulique (35) comporte une vanne (37) pilotée par le contrôleur de commande (40).

10. Procédé de contrôle d'un premier actionneur (10, 61) muni d'une pompe (15) reliée à une première liaison hydraulique (30) et à une deuxième liaison hydraulique (35), la première liaison hydraulique (30) étant connectée à un réservoir (25) contenant un fluide (6), **caractérisé en ce que** le procédé comporte les étapes suivantes :
- mesure (MES1) d'une première pression d'alimentation (PCOM) dans ladite deuxième liaison hydraulique (35) avec un premier capteur de pression (41),
- mesure (MES2) d'une deuxième pression d'alimentation (PMON) dans ladite deuxième liaison hydraulique (35) avec un deuxième capteur de pression (51),
- dans un mode de fonctionnement nominal (MODNOM), asservissement d'une pression du fluide délivré par ladite pompe (15) dans la deuxième liaison hydraulique en fonction d'une consigne de pression (PCONS) et de la première pression d'alimentation (PCOM), et surveillance de l'actionneur (10) en fonction de la deuxième pression d'alimentation (PMON),
- détermination (MES3) d'au moins un paramètre de fonctionnement (VOL) de la pompe (15),
- détermination d'une première pression de vérification (PV1), avec le contrôleur de commande(40), à partir d'une valeur dudit au moins un paramètre de fonctionnement (VOL) et d'une loi de conversion,
- détermination d'une deuxième pression de vérification (PV2), avec le contrôleur de surveillance (50), à partir d'une valeur dudit au moins un paramètre de fonctionnement (VOL) et de la loi de conversion
et
- détection (STPD) d'une panne de l'actionneur (10) et application en conséquence d'un mode de fonctionnement dégradé (MODDEG) en fonction dudit au moins un paramètre de fonctionnement (VOL), le mode de fonctionnement dégradé (MODDEG) étant choisi parmi plusieurs modes de fonctionnement dégradé en fonction :
- d'une comparaison (COMP1) faite par le contrôleur de surveillance (50) de la deuxième pression de vérification (PV2) et de la deuxième pression d'alimentation (PMON) et
- d'une comparaison (COMP2) faite par le contrôleur de commande (40) de la première pression de vérification (PV1) et de la première pression d'alimentation (PCOM).

11. Procédé selon la revendication 10,
**caractérisé en ce que** le premier actionneur(61) alimentant en liquide hydraulique un frein d'un premier atterrisseur principal (91) d'un aéronef (90), ledit aéronef (90) comportant un second actionneur (62) alimentant en liquide hydraulique un frein d'un second atterrisseur principal (92), ladite consigne de pression est égale à une première pression de freinage durant un fonctionnement normal et à une deuxième pression de freinage supérieure à la première pression de freinage en présence d'une alerte générée par le second actionneur.

12. Système de freinage (60) muni d'un frein hydraulique (65) et d'une commande de freinage (63),
**caractérisé en ce que** le système de freinage (60) comporte un actionneur (10) selon l'une quelconque des revendications 1 à 9, ladite commande de freinage (63) émettant une consigne de pression (PCONS) pour piloter l'actionneur, ladite deuxième liaison hydraulique (35) étant connectée hydrauliquement au frein hydraulique (65).

13. Aéronef (90) muni de deux atterrisseurs principaux à roue (91, 92) et d'un atterrisseur auxiliaire à roue (93),
**caractérisé en ce que** les deux atterrisseurs principaux à roue (91, 92) comportant chacun un système de freinage (60) selon la revendication 12.

14. Aéronef selon la revendication 13,
**caractérisé en ce que** l'aéronef (90) comporte un système d'immobilisation (94) pour immobiliser au sol l'atterrisseur auxiliaire à roue (93) dans une position prédéterminée.

## Patentansprüche

1. Stellglied (10) für ein Bremssystem, wobei das Stellglied (10) mit einer Pumpe (15) ausgestattet ist, die mit einer ersten Hydraulikverbindung (30) und einer zweiten Hydraulikverbindung (35) verbunden ist, wobei die erste Hydraulikverbindung (30) mit einem ein Fluid (26) enthaltenden Reservoir (25) verbunden ist, wobei das Stellglied (10) eine Steuereinheit (40) aufweist, die mit einem ersten Drucksensor (41) kommuniziert, wobei der erste Drucksensor (41) an der zweiten Hydraulikverbindung (35) angeordnet ist und einen ersten Versorgungsdruck (PCOM) misst, wobei das Stellglied (10) eine Überwachungseinheit (50) aufweist, die mit der Steuereinheit (40) und einem zweiten Drucksensor (51) kommuniziert, wobei der zweite Drucksensor (51) an der zweiten Hydraulikverbindung (35) angeordnet ist und einen zweiten Versorgungsdruck (PMON) misst, wobei in einem nominalen Betriebsmodus (MODNOM) die Überwachungseinheit (50) konfiguriert ist, um das Stellglied (10) in Abhängigkeit vom zweiten Versorgungsdruck zu überwachen (PMON) zu überwachen, und die Steuereinheit (40) konfiguriert ist, um einen Druck der von der Pumpe (15) in die zweite Hydraulikverbindung (35) gelieferten Flüssigkeit in Abhängigkeit vom ersten Versorgungsdruck (PCOM) auf einen Druckvorgabewert (PCONS) zu regeln,
**dadurch gekennzeichnet, dass** das Stellglied (10) einen virtuellen Drucksensor umfasst, der mit einem Druckmodell ausgestattet ist, das von einem Wert mindestens eines Betriebsparameters der Pumpe (15) abhängt, der mit einem Prüfgerät (55) ausgewertet wird, das mindestens ein Prüfsignal (SVERIF), das diesen Wert enthält, an die Steuereinheit (40) und die Überwachungseinheit (50) überträgt, um eine Störung des Stellglieds (10) zu identifizieren und entsprechend einen eingeschränkten Betriebsmodus (MODDEG) einzuleiten, wobei die Steuereinheit (40) konfiguriert ist, um einen ersten Prüfdruck (PV1) aus dem mindestens einen Prüfsignal (SVERIF) und einer Umrechnungsvorschrift des Druckmodells zu bestimmen, wobei die Überwachungseinheit (50) konfiguriert ist, um einen zweiten Prüfdruck (PV2) aus dem mindestens einen Prüfsignal (SVERIF) und der Umrechnungsvorschrift zu bestimmen; wobei die Überwachungseinheit (50) und die Steuereinheit (40) konfiguriert sind, um, wenn das Stellglied (10) nicht im nominalen Betriebsmodus (MODNOM) arbeitet, einen eingeschränkten Betriebsmodus (MODDEG) anzuwenden, der aus mehreren eingeschränkten Betriebsmodi ausgewählt wird, abhängig von:
- einem Vergleich (COMP1) des zweiten Prüfdrucks (PV2) und des zweiten Versorgungsdrucks (PMON) durch die Überwachungseinheit (50) und
- einem Vergleich (COMP2) des ersten Prüfdrucks (PV1) und des ersten Versorgungsdrucks (PCOM) durch die Steuereinheit (40).

2. Stellglied nach Anspruch 1,
**dadurch gekennzeichnet, dass** die Pumpe (15) einen Elektromotor (16) mit einer beweglichen Komponente (160) umfasst, die ein Pumpenglied (17) relativ zu einem Gehäuse (18) in Bewegung versetzt, wobei das Prüfgerät (55) mindestens einen der folgenden Betriebsparameter misst: die Bewegung des Pumpenglieds (17) oder des Bauteils (160) des Motors (16), eine elektrische Eigenschaft eines elektrischen Stroms, der den Motor (16) elektrisch versorgt oder in ihm fließt.

3. Stellglied nach einem der Ansprüche 1 bis 2,
**dadurch gekennzeichnet, dass** die Überwachungseinheit (50) konfiguriert ist, um zu bestimmen, ob der zweite Versorgungsdruck (PMON) innerhalb einer vorgegebenen Toleranz mit einem Solldruck (PNOM) übereinstimmt, wobei die Überwachungseinheit (50) und die Steuereinheit (40) einen eingeschränkten Betriebsmodus anwenden, wenn der zweite Versorgungsdruck (PMON) nicht innerhalb einer vorbestimmten Toleranz mit dem Solldruck (PNOM) übereinstimmt.

4. Stellglied nach Anspruch 3,
**dadurch gekennzeichnet, dass** die Überwachungseinheit (50) konfiguriert ist, um den Solldruck (PNOM) aus dem Druckvorgabewert (PCONS) zu bestimmen.

5. Stellglied nach einem der Ansprüche 1 bis 4,
**dadurch gekennzeichnet, dass** das Stellglied (10) einen permanenten Speicher (45) aufweist, der Aktualisierungsdaten speichert, die eine Entwicklung des Wertes des mindestens einen Betriebsparameters und mindestens eines von erstem und zweitem Prüfdruck in einem laufenden Betriebszyklus der Pumpe (15) während einer Anwendung des nominalen Betriebsmodus umfasst, wobei zumindest die Überwachungseinheit (50) oder die Steuereinheit (40) konfiguriert ist, um die Umwandlungsvorschrift in Abhängigkeit von den gespeicherten Aktualisierungsdaten zu aktualisieren.

6. Stellglied nach einem der Ansprüche 1 bis 5,
**dadurch gekennzeichnet, dass**, solange der zweite Prüfdruck (PV2) und der zweite Versorgungsdruck (PMON) innerhalb einer vorgegebenen Toleranz identisch sind und gleichzeitig der erste Prüfdruck (PV1) und der erste Versorgungsdruck (PCOM) innerhalb einer vorgegebenen Toleranz nicht identisch sind, der eingeschränkte Betriebsmodus (MODDEG) ein eingeschränkter Betriebsmodus mit virtuellem Sensor (MOD1) ist, in dem die Steuereinheit (40) konfiguriert ist, um entsprechend dem ersten Prüfdruck (PV1) und dem Druckvorgabewert (PCONS) ein Steuersignal an die Pumpe (15) zu senden, und die Überwachungseinheit (50) konfiguriert ist, um das Stellglied (10) unter Verwendung des zweiten Versorgungsdrucks (PMON) zu überwachen.

7. Stellglied nach einem der Ansprüche 1 bis 6,
**dadurch gekennzeichnet, dass**, solange der zweite Prüfdruck (PV2) und der zweite Versorgungsdruck (PMON) nicht innerhalb einer vorgegebenen Toleranz identisch sind und gleichzeitig der erste Prüfdruck (PV1) und der erste Versorgungsdruck (PCOM) nicht innerhalb einer vorgegebenen Toleranz identisch sind, der eingeschränkte Betriebsmodus (MODDEG) ein inaktiver Modus (MOD2) ist, in dem die Steuereinheit (40) inaktiv ist und die Überwachungseinheit (50) konfiguriert ist, um einen Alarm auszulösen.

8. Stellglied nach einem der Ansprüche 1 bis 7,
**dadurch gekennzeichnet, dass**, solange der zweite Prüfdruck (PV2) und der zweite Versorgungsdruck (PMON) nicht innerhalb einer vorgegebenen Toleranz identisch sind und gleichzeitig der erste Prüfdruck (PV1) und der gemessene erste Versorgungsdruck (PCOM) innerhalb einer vorgegebenen Toleranz identisch sind, der eingeschränkte Betriebsmodus (MODDEG) ein eingeschränkter Überwachungsbetriebsmodus (MOD3) ist, wobei die Steuereinheit (40) konfiguriert ist, um in Abhängigkeit vom ersten Versorgungsdruck (PCOM) ein Steuersignal an die Pumpe (15) auszugeben, und die Überwachungseinheit (50) konfiguriert ist, um den Aktuator (10) unter Verwendung des zweiten Prüfdrucks (PV2) zu überwachen.

9. Aktuator nach einem der Ansprüche 1 bis 8,
**dadurch gekennzeichnet, dass** die zweite Hydraulikverbindung (35) ein von der Steuereinheit (40) gesteuertes Ventil (37) umfasst.

10. Verfahren zum Steuern eines ersten Stellglieds (10, 61), das mit einer Pumpe (15) ausgestattet ist, die mit einer ersten Hydraulikverbindung (30) und einer zweiten Hydraulikverbindung (35) verbunden ist, wobei die erste Hydraulikverbindung (30) mit einem Reservoir (25) verbunden ist, das ein Fluid (6) enthält, **dadurch gekennzeichnet, dass** das Verfahren die folgenden Schritte umfasst:
- Messen (MES1) eines ersten Versorgungsdrucks (PCOM) in der zweiten Hydraulikverbindung (35) mit einem ersten Drucksensor (41),
- Messen (MES2) eines zweiten Versorgungsdrucks (PMON) in der zweiten Hydraulikverbindung (35) mit einem zweiten Drucksensor (51),
- in einem nominalen Betriebsmodus (MODNOM) Regeln eines Drucks von von der Pumpe (15) in die zweite Hydraulikverbindung abgegebenem Fluid in Abhängigkeit von einem (PCONS) und dem ersten Versorgungsdruck (PCOM) und Überwachen des Stellglieds (10) in Abhängigkeit vom zweiten Versorgungsdruck (PMON),
- Bestimmen (MES3) mindestens eines Betriebsparameters (VOL) der Pumpe (15),
- Bestimmen eines ersten Prüfdrucks (PV1) mit der Steuereinheit (40) anhand eines Wertes des mindestens einen Betriebsparameters (VOL) und einer Umrechnungsvorschrift,
- Bestimmen eines zweiten Prüfdrucks (PV2) mit der Überwachungseinheit (50) anhand eines Wertes des mindestens einen Betriebsparameters (VOL) und der Umrechnungsvorschrift und
- Erkennen (STPD) einer Störung des Stellglieds (10) und entsprechendes Anwenden eines eingeschränkten Betriebsmodus (MODDEG) in Abhängigkeit von dem mindestens einen Betriebsparameter (VOL), wobei der eingeschränkte Betriebsmodus (MODDEG) aus mehreren eingeschränkten Betriebsmodi ausgewählt wird in Abhängigkeit von:
- einem Vergleich (COMP1) des zweiten Prüfdrucks (PV2) und des zweiten Versorgungsdrucks (PMON) durch die Überwachungseinheit (50) und
- einem Vergleich (COMP2) des ersten Prüfdrucks (PV1) und des ersten Versorgungsdrucks (PCOM) durch die Steuereinheit (40).

11. Verfahren nach Anspruch 10,
**dadurch gekennzeichnet, dass** das erste Stellglied (61) eine Bremse eines ersten Hauptfahrwerks (91) eines Flugzeugs (90) mit Hydraulikflüssigkeit versorgt, wobei das Flugzeug (90) ein zweites Stellglied (62) aufweist, das eine Bremse eines zweiten Hauptfahrwerks (92) mit Hydraulikflüssigkeit versorgt, wobei der Druckvorgabewert während des Normalbetriebs einem ersten Bremsdruck entspricht und bei Vorliegen einer vom zweiten Stellglied erzeugten Warnung einem zweiten Bremsdruck entspricht, der höher ist als der erste Bremsdruck.

12. Bremssystem (60) mit einer hydraulischen Bremse (65) und einer Bremsensteuereinheit (63),
**dadurch gekennzeichnet, dass** das Bremssystem (60) ein Stellglied (10) gemäß einem der Ansprüche 1 bis 9 umfasst,
wobei die Bremsensteuereinheit (63) einen Druckvorgabewert (PCONS) zum Steuern des Stellglieds ausgibt, wobei die zweite Hydraulikverbindung (35) hydraulisch mit der hydraulischen Bremse (65) verbunden ist.

13. Flugzeug (90) mit zwei Hauptfahrwerken (91, 92) und einem Zusatzfahrwerk (93),
**dadurch gekennzeichnet, dass** die beiden Hauptfahrwerke (91, 92) jeweils ein Bremssystem (60) nach Anspruch 12 aufweisen.

14. Flugzeug gemäß Anspruch 13,
**dadurch gekennzeichnet, dass** das Flugzeug (90) ein Feststellsystem (94) aufweist, um das Hilfsfahrwerk (93) in einer vorbestimmten Position am Boden festzustellen.

## Claims

1. An actuator (10) for a braking system, the actuator (10) being equipped with a pump (15) connected to a first hydraulic connection (30) and to a second hydraulic connection (35), the first hydraulic connection (30) being connected to a reservoir (25) containing a fluid (26), said actuator (10) having a command controller (40) communicating with a first pressure sensor (41), the first pressure sensor (41) being arranged on the second hydraulic connection (35) and measuring a first supply pressure (PCOM), said actuator (10) comprising a monitoring controller (50) communicating with the command controller (40) and a second pressure sensor (51), the second pressure sensor (51) being arranged on the second hydraulic connection (35) and measuring a second supply pressure (PMON), in a nominal operating mode (MODNOM) the monitoring controller (50) being configured to monitor the actuator (10) as a function of the second supply pressure (PMON) and the command controller (40) being configured to slave a pressure of the fluid delivered by said pump (15) in the second hydraulic connection (35) to a pressure setpoint (PCONS) as a function of the first supply pressure (PCOM),
**characterised in that** said actuator (10) comprises a virtual pressure sensing device equipped with a pressure model depending on a value of at least one operating parameter of the pump (15) evaluated with a verification instrument (55) which transmits at least one verification signal (SVERIF) carrying said value to the command controller (40) and to the monitoring controller (50) in order to identify a failure of the actuator (10) and consequently apply a degraded operating mode (MODDEG), the command controller (40) being configured to determine a first verification pressure (PV1) from said at least one verification signal (SVERIF) and a conversion law of the pressure model, the monitoring controller (50) being configured to determine a second verification pressure (PV2) from said at least one verification signal (SVERIF) and the conversion law; the monitoring controller (50) and the command controller (40) being configured to apply, when the actuator (10) is not operating in the nominal operating mode (MODNOM), a degraded operating mode (MODDEG) chosen from several degraded operating modes as a function of:
- a comparison (COMP1) made by the monitoring controller (50) of the second verification pressure (PV2) and of the second supply pressure (PMON), and
- a comparison (COMP2) made by the command controller (40) of the first verification pressure (PV1) and the first supply pressure (PCOM).

2. Actuator according to claim 1,
**characterised in that** the pump (15) comprises an electric motor (16) having a movable component (160) setting a pumping member (17) in motion in relation to a housing (18), the verification instrument (55) measuring at least one of the following operating parameters: the movement of said pumping member (17) or of the component (160) of the motor (16), an electrical characteristic of an electric current supplying electrical power to or flowing in the motor (16).

3. Actuator according to any of claims 1 to 2,
**characterised in that** the monitoring controller (50) is configured to determine if the second supply pressure (PMON) is identical, within a predetermined margin, to a target pressure (PNOM), the monitoring controller (50) and the command controller (40) applying a degraded operating mode when the second supply pressure (PMON) is not identical, within a predetermined margin, to the target pressure (PNOM).

4. Actuator according to claim 3,
**characterised in that** the monitoring controller (50) is configured to determine the target pressure (PNOM) from said pressure setpoint (PCONS).

5. Actuator according to any of claims 1 to 4,
**characterised in that** said actuator (10) comprises a permanent memory (45) storing update data comprising a change, over time, of said value of said at least one operating parameter and of at least one of the first and second verification pressures during a current operating cycle of the pump (15) during application of the nominal operating mode, at least said monitoring controller (50) or said command controller (40) being configured to update said conversion law as a function of the stored update data.

6. Actuator according to any of claims 1 to 5,
**characterised in that**, as long as the second verification pressure (PV2) and the second supply pressure (PMON) are identical, within a predetermined margin, and, at the same time, the first verification pressure (PV1) and the first supply pressure (PCOM) are not identical, within a predetermined margin, said degraded operating mode (MODDEG) is a slave degraded operating mode with virtual sensor (MOD1) during which the command controller (40) is configured to transmit a control signal to the pump (15) as a function of the first verification pressure (PV1) and of said pressure setpoint (PCONS), and the monitoring controller (50) is configured to monitor the actuator (10) by using the second supply pressure (PMON).

7. Actuator according to any of claims 1 to 6,
**characterised in that**, as long as the second verification pressure (PV2) and the second supply pressure (PMON) are not identical, within a predetermined margin, and, at the same time, the first verification pressure (PV1) and the first supply pressure (PCOM) are not identical, within a predetermined margin, said degraded operating mode (MODDEG) is an inactive mode (MOD2) during which the command controller (40) is inactive and the monitoring controller (50) is configured to generate an alert.

8. Actuator according to any of claims 1 to 7,
**characterised in that**, as long as the second verification pressure (PV2) and the second supply pressure (PMON) are not identical, within a predetermined margin, and, at the same time, the first verification pressure (PV1) and the first measured supply pressure (PCOM) are identical, within a predetermined margin, said degraded operating mode (MODDEG) is a monitoring degraded operating mode (MOD3), the command controller (40) being configured to transmit a control signal to the pump (15) as a function of the first supply pressure (PCOM) and the monitoring controller (50) is configured to monitor the actuator (10) by using the second verification pressure (PV2).

9. Actuator according to any of claims 1 to 8,
**characterised in that** the second hydraulic connection (35) comprises a valve (37) controlled by the command controller (40).

10. A method for controlling a first actuator (10, 61) equipped with a pump (15) connected to a first hydraulic connection (30) and to a second hydraulic connection (35), the first hydraulic connection (30) being connected to a reservoir (25) containing a fluid (6), **characterised in that** the method comprises the following steps:
- measuring (MES1) a first supply pressure (PCOM) in said second hydraulic connection (35) with a first pressure sensor (41),
- measuring (MES2) a second supply pressure (PMON) in said second hydraulic connection (35) with a second pressure sensor (51),
- in a nominal operating mode (MODNOM), slaving a fluid pressure delivered by said pump (15) in the second hydraulic connection as a function of a pressure setpoint (PCONS) and of the first supply pressure (PCOM), and monitoring the actuator (10) as a function of the second supply pressure (PMON),
- determining (MES3) at least one operating parameter (VOL) of the pump (15),
- determining a first verification pressure (PV1), with the command controller (40), from a value of said at least one operating parameter (VOL) and a conversion law,
- determining a second verification pressure (PV2), with the monitoring controller (50), from a value of said at least one operating parameter (VOL) and of the conversion law, and
- detecting (STPD) a failure of the actuator (10) and consequently applying a degraded operating mode (MODDEG) as a function of said at least one operating parameter (VOL), the degraded operating mode (MODDEG) being chosen from several degraded operating modes as a function of:
- a comparison (COMP1) made by the monitoring controller (50) of the second verification pressure (PV2) and of the second supply pressure (PMON), and
- a comparison (COMP2) made by the command controller (40) of the first verification pressure (PV1) and of the first supply pressure (PCOM).

11. Method according to claim 10,
**characterised in that** the first actuator (61) supplying hydraulic fluid to a brake of a first main landing gear (91) of an aircraft (90), said aircraft (90) comprising a second actuator (62) supplying hydraulic fluid to a brake of a second main landing gear (92), said pressure setpoint being equal to a first braking pressure during normal operation and to a second braking pressure greater than the first braking pressure when there is an alert generated by the second actuator.

12. A braking system (60) equipped with a hydraulic brake (65) and a brake control (63),
**characterised in that** the braking system (60) comprises an actuator (10) according to any of claims 1 to 9, said brake control (63) transmitting a pressure setpoint (PCONS) to control the actuator, said second hydraulic connection (35) being hydraulically connected to the hydraulic brake (65).

13. An aircraft (90) equipped with two main wheeled landing gears (91, 92) and an auxiliary wheeled landing gear (93),
**characterised in that** the two main wheeled landing gears (91, 92) each comprise a braking system (60) according to claim 12.

14. Aircraft according to claim 13,
**characterised in that** the aircraft (90) comprises an immobilisation system (94) for immobilising the auxiliary wheeled landing gear (93) on the ground in a predetermined position.
